# EUROPÄISCHE PATENTSCHRIFT

(11) **EP 1 709 569 B1**
(45) Veröffentlichungstag und Bekanntmachung des Hinweises auf die Patenterteilung: **19.08.2009**
(21) Anmeldenummer: 05701106.6
(22) Anmeldetag: 21.01.2005
(51) Int. Cl.: G06K 9/00

(54) **VORRICHTUNG UND VERFAHREN FÜR DIE FINGERLINIENERKENNUNG**
DEVICE AND METHOD FOR IDENTIFYING FINGERPRINTS
DISPOSITIF ET PROCEDE POUR LA RECONNAISSANCE DES CRETES PAPILLAIRES

(30) Priorität: 23.01.2004 DE 102004003783; 05.11.2004 DE 102004053901
(43) Veröffentlichungstag der Anmeldung: 11.10.2006
(73) Patentinhaber: TBS Holding AG, 8808 Pfäffikon SZ (CH)
(72) Erfinder: HAUKE, Rudolf, 89168 Niederstotzingen (DE); NOTHAFT, Hans-Peter, 89233 Neu-Ulm (DE)
(74) Vertreter: Pfister, Stefan Helmut Ulrich
(86) Internationale Anmeldenummer: PCT/EP2005/000588
(87) Internationale Veröffentlichungsnummer: WO 2005/071599

(56) Entgegenhaltungen:
- WO-A-01/09817
- WO-A-99/43258
- WO-A-20/04093000
- DE-A1- 3 424 955
- DE-C1- 19 804 129
- US-A- 3 576 538
- US-A- 5 278 916
- US-A1- 2002 106 115
- US-B1- 6 404 904

## Beschreibung

Die Erfindung betrifft eine Vorrichtung für die Fingerlinienerkennung.

Artverwandte Anordnungen sind zum Beispiel für die forensische Datenerfassung von Fingerlinien bekannt. Zum Beispiel werden von Personen Fingerabdrücke derart genommen, daß die jeweiligen Finger mit Druckerschwärze bestrichen werden und die einzelnen Finger dann auf einem Datenblatt abgedrückt werden. Ähnlich wie beim Drucken bilden sich so die Muster der Fingerlinien ab.

Nachteilig bei dieser Vorgehensweise ist, daß das Abbild so noch nicht in datentechnischer Form vorliegt. Für eine datentechnische Ausnutzung dieser Informationen sind zusätzliche Schritte notwendig. Des Weiteren ist das Aufnehmen der Fingerabdrücke in dieser Weise sehr zeitaufwendig, da jeder der einzelnen zehn Finger entsprechend zu verarbeiten ist. Dabei muß auch ein erheblicher Aufwand getrieben werden, um sicherzustellen, daß zum Beispiel der Ringfinger der linken Hand auch als Ringfinger der linken Hand zugeordnet ist.

Auch ist bei diesem mechanischen Druckvorgang die Gefahr von schlecht genommenen Fingerabdrücken verhältnismäßig hoch, was zu entsprechendem zusätzlichen Zeitaufwand führt.

Darüberhinaus führt das Abrollen der Finger auf der Papierunterlage zu einer Verzerrung der Fingerlinien. Die Liniengestaltung ist, wenn auf die Fingerkuppen beziehungsweise Fingerflächen Druck ausgeübt wird, anders, als wenn diese nicht druckbelastet sind. Diese Verzerrungen sind ein grundsätzliches Problem der Fingerlinienerkennung durch Auflegen der Finger auf entsprechende Sensorflächen und dergleichen.

Um dies zu vermeiden, ist zum Beispiel durch die internationale Patentanmeldung WO 99/56237 ein System für die berührungslose Hand- und Fingerlinienerkennung bekannt geworden. Durch diese Anordnung wird bereits erreicht, daß zum Beispiel die Fingerkuppe optisch derart abgetastet beziehungsweise abgescannt wird, um ein zum Beispiel auch datentechnisch verfügbares Abbild zu erzeugen. Der Nachteil hierbei ist immer noch der, daß die Fingerkuppe zylinderartig gebogen ist und für eine möglichst gute Aufnahme die optische Übertragung natürlich optimal sein sollte, also das Abbild mit entsprechender Tiefenschärfe zu focussieren ist. Ein weiterer Nachteil liegt darin, daß nach wie vor mit dieser Anordnung der Finger einzeln abzutasten ist und damit immer noch ein erheblicher Zeitaufwand besteht.

In der internationalen Patentanmeldung WO 99/43258 ist eine Vorrichtung für das Messen der Struktur von Fingerlinien oder dergleichen vorgestellt. Dabei wird ein U-förmig ausgebildeter Sensor gezeigt, der die Dimensionen des Fingers zu messen vermag.

Aus der Druckschrift WO 2004/093000 A1 (veröffentlicht am 28.10.2004) ist ein System zur berührungslosen Abbildung von Hautleisten mit hohem Kontrast bekannt, wobei die Bilderfassungseinheit aus mehreren einzelnen Aufnahmeelementen besteht, die radial um eine angenommene Fingerachse angeordnet sind.

Aus der Druckschrift DE 34 24 955 A1 ist eine Anordnung zum Erfassen von Fingerpappilaren bekannt. Die bekannte Vorrichtung zeichnet sich dadurch aus, dass mit einem Lichtpunkt die Papillarlinien in einem Zeilenraster abgetastet werden. Der Fotosensor wandelt das zurückgestreute Licht in ein elektronisches Signal um, das nach Analog-Digital-Umsetzung gespeichert wird. Die Erfindung erreicht dies mit einer Ablenkeinheit, die radial um den aufzunehmenden Finger während des Abtastvorgangs bewegt werden muss. Damit ist die Vorrichtung in der Herstellung aufwändig und störanfällig.

Ausgehend von diesem Stand der Technik hat es sich die Erfindung zur Aufgabe gemacht, eine Vorrichtung zur Verfügung zu stellen, durch die die Aufnahme zumindest von Fingerlinien wie zum Beispiel bei Fingerabdrücken und so weiter verbessert wird.

Zur Lösung dieser Aufgabe wurde eine Vorrichtung für die Fingerlinienerkennung vorgeschlagen, wobei die Vorrichtung wenigstens einen Fingererfassungsbereich besitzt, und der Fingererfassungsbereich zumindest eine Bilderfassungseinheit aufweist, die dazu dient, einen Großteil der Fingermantelfläche aufzunehmen, wobei die Bilderfassungseinheit aus mehreren einzelnen Aufnahmeelementen besteht, die radial um eine angenommene Fingerachse angeordnet sind, die sich dadurch auszeichnet, dass der Fingererfassungsbereich durch eine Auflagekante für den Fingeransatz gebildet ist, der Finger über die Auflagekante vorsteht und unterhalb des vorstehenden Fingers die Bilderfassungseinheit vorgesehen ist.

Nach der Erfindung ist es vorgesehen, daß der Fingererfassungsbereich eine Bilderfassungseinheit für den Finger aufweist. Die Bilderfassungseinheit ist, wie weiter unten noch erläutert wird, unter Umständen verhältnismäßig komplex ausgebildet, insbesondere um die zylinderartige Mantelfläche des Fingers fläche des Fingers aufzunehmen. Erfindungsgemäß wird vorgeschlagen, daß zumindest eine Bilderfassungseinheit dem Fingererfassungsbereich zugeordnet ist. Bei geschickter Ausgestaltung ist es natürlich möglich, zum Beispiel zwei oder mehrere Fingererfassungsbereiche nebeneinander anzuordnen, die dann mit einer, oder einer geringeren Anzahl von Bilderfassungseinheiten wie Fingererfassungsbereichen in Verbindung stehen, derart, daß die Bilderfassungseinheit eine Aufnahme von dem Finger, insbesondere dessen Mantelfläche, erfaßt beziehungsweise erzeugt.

Erfindungsgemäß wird weiter vorgeschlagen, daß die Vorrichtung einen Fingererfassungsbereich bewirkt und dieser durch eine Auflagekante für den Fingeransatz gebildet ist, der Finger über die Auflagekante vorsteht und unterhalb des vorstehenden Fingers eine Bilderfassungseinheit vorgesehen ist, die dazu dient, die Fingermantelfläche aufzunehmen.

Geometrisch angenähert entspricht der Finger einem, wenn auch nicht exakten, Zylinder. Die Fingerlinien erstrecken sich auf der Mantellinie und befinden sich somit in unterschiedlichen Brennebenen. Das auch berührungsfreie Aufnehmen der Unterseite des Fingers ergibt nur, entsprechend der gewählten Tiefenschärfe, in einem begrenzten Bereich eine wahrheitsgetreue und nicht verschwommene Aufnahme der Fingerlinie. Für eine möglichst optimale Abbildung wird durch den erfindungsgemäßen Vorschlag Rechnung getragen, dahingehend, daß eine Bilderfassungseinheit vorgesehen ist, die erreicht, daß ein Großteil der Fingermantelfläche aufgenommen wird. Dabei ist in der Regel die Fingeroberseite für die Erkennung der Fingerlinien nicht von Interesse, wohl aber der Bereich von Nagel bis Nagel. Dies wird näherungsweise als Großteil der Fingermantelfläche angesehen.

Nach der Erfindung ist vorgesehen, daß die Vorrichtung eine zum Beispiel bezüglich dem Gehäusedeckel zurückgesetzte Auflagekante aufweist und der Probant seinen Finger in die Vorrichtung einführt. Geschickterweise ist die Bilderfassungseinheit im Fingererfassungsbereich radial um den idealerweise zylindrisch angenommenen Finger angeordnet. Gegebenenfalls weist das Gehäuse der Vorrichtung im Fingererfassungsbereich eine Erhöhung auf, um ausreichend Platz für die Bildbearbeitungseinheit zu schaffen, den Umfang des Finges aufnehmen zu können.

Die Aufnahme der Fingerlinien wird durch diesen Vorschlag in einem weiten Bereich der Mantelfläche qualitativ erheblich verbessert, es wird ein vollständiges Abrollbild der Fingermantelfläche zur Verfügung gestellt.

Ein wesentlicher Aspekt der Erfindung liegt insbesondere auch darin, daß die Vorrichtung sowohl das Erzeugen eines Kontrollabzuges wie auch danach oder auch vorher das Anfertigen jeweilig einzelner Aufnahmen der jeweiligen Finger beziehungsweise Daumen in einem Gerät erlaubt. Dabei ist die Bauform so kompakt und klein wählbar, um beide Möglichkeiten in einem nicht großbauenden Gehäuse, insbesondere einem mobilen Gehäuse zur Verfügung zu stellen. Die Konfortabilität eines solchen Gerätes mit den erfindungsgemäßen Eigenschaften wird daher erheblich erhöht.

Gemäß der Erfindung wird deshalb vorgeschlagen, die Bilderfassungseinheit aus mehreren, einzelnen Aufnahmeelementen zu bilden, die radial um eine angenommene Fingerachse angeordnet sind.

Das optische System, das hierbei eingesetzt wird, entspricht dabei einem abgerollten Fingerabdruck, wodurch die Fingermantelfläche in eine zweidimensionale Bildebene aufgenommen wird. Hierzu werden mehrere, in einem bevorzugten Beispiel fünf, auf CMOS-Technologie basierende, als Kameramatritzen ausgebildete Aufnahmeelemente eingesetzt, die seitlich neben dem Finger und unterhalb des Fingers angeordnet sind.

Für eine optimale Beleuchtung des Fingers sind zwischen den Aufnahmeelementen Beleuchtungseinheiten, zum Beispiel LED-Bänke mit bevorzugt grünem Licht vorgesehen. Der Einsatz von grünem Licht führt bei der Auflösung zu einem besseren Kontrast.

Des Weiteren ist vorgesehen, daß die von den einzelnen Aufnahmeelementen aufgenommenen Ansichten der Fingermantelfläche durch eine Bildverarbeitungseinheit in zweidimensionale Bilder überführt werden. Die Anordnung ist dabei so gewählt, daß jedes einzelne Aufnahmeelement bezüglich eines speziellen Winkelsegmentes des Fingers focussiert ist, also diesen Bereich optimal optisch abbildet. Hierzu ist zum Beispiel vorgesehen, daß das Aufnahmeelement mit entsprechenden optischen Bauteilen wie Linsen, Spiegeln und so weiter ausgestattet ist. Diese "rinnenartigen" Bilder werden dann in einer Bildverarbeitungseinheit, auf welcher eine entsprechende Software läuft, so bearbeitet, daß ein zweidimensionales Bild entsteht und eine abgewickelte Fingermantelfläche ohne druckbedingte Verzerrung oder dergleichen resultiert.

In einer weiteren erfindungsgemäßen Variante ist vorgesehen, daß die Auflagekante neben dem Handanlagebereich oder zwischen den beiden Handanlagebereichen angeordnet ist.

Das Gehäuse der erfindungsgemäßen Vorrichtung besitzt zum Beispiel eine Länge von ca. 40 cm. Die Scanneinheiten zum Erzeugen der Kontrollabzüge der vier Finger und des Daumens befinden sich jeweils in dem seitlichen Bereich des Gehäuses. Der mittlere Bereich steht damit zur Verfügung, die Auflagekante zu bilden, unter der sich dann die Bilderfassungseinheit zur Aufnahme der Mantelfläche in platzsparender beziehungsweise platzoptimierter Ausgestaltung befindet.

Günstigerweise ist die Auflagekante auf oder in der Gehäuseoberseite angeordnet, wodurch die Bedienbarkeit extremst erleichtert ist.

Die Aufnahme der Fingerlinien wird erheblich beschleunigt und daher verbessert.

Die Erfindung erreicht, daß auf einmal zumindest mehrere, wenn nicht sogar alle Finger und der Daumen einer Hand aufgenommen werden. Vorteilhafterweise erfolgt dies dabei berührungslos. Der Zeitvorteil hierfür ist bereits erheblich, da in einem Bildaufnahmeschritt bis zu fünf Bilder erzeugt werden. Die Anordnung ist dabei so getroffen, daß der Handanlagebereich beziehungsweise Daumenanlagebereich so zueinander positioniert sind, daß diese von der Hand ergonomisch günstig zu erfassen sind. Da der Daumen bezüglich seiner Längserstreckung zu den anderen Fingern ungefähr rechtwinklig absteht, ist es günstig, auch die Orientierung der Handanlagfläche bezüglich der Daumenanlagefläche winklig, bevorzugt rechtwinklig auszubilden, um somit die Ergonomie zu verbessern. Wird die Vorrichtung ergonomisch günstig gestaltet, resultieren hieraus auch bessere Aufnahmen, da die Personen, deren Fingerlinien zu erkennen sind, während der Bildaufnahme kaum verkrampfen und entspannt sind. Dadurch unterstützt die günstige ergonomische Ausgestaltung auch das Bearbeitungsergebnis erheblich, wodurch das Risiko von schlechten Aufnahmen aufgrund zurückgezogener gekrümmter Finger und dergleichen zusätzlich reduziert wird. Die Erfindung erreicht daher neben einer hohen Geschwindigkeit auch eine geringe Ausschußzahl, aufgrund der günstigen ergonomischen Anordnung von Daumenanlagebereich und Handanlagebereich.

Der Anlagebereich ist dabei so definiert, daß es sich hierbei um den Bereich handelt, in welchem die Hand beziehungsweise der Daumen anliegt. Die Erfindung läßt es hierbei offen, ob die Anordnung hier bereits berührungslos ist oder ob die Hand beziehungsweise der Daumen auf den Anlagebereich aufgedrückt wird, wodurch sich gegebenenfalls Verzerrungen ergeben können. Beide Varianten sind gemäß der Erfindung vorgesehen, wenngleich die berührungslose Fingerlinienerkennung, wie noch weiter unten geschildert wird, zusätzliche Vorteile aufweist. Der Anlagebereich umschließt daher sowohl ein berührungsloses wie berührendes Erkennen der Fingerlinien.

Nach der Erfindung ist es vorgesehen, daß die Vorrichtung mindestens einen Fingererfassungsbereich für einen einzelnen Finger einer Hand aufweist. Durch diese erfindungsgemäße Ausgestaltung wird erreicht, daß wahlweise mit ein und derselben Vorrichtung entweder ein Abbild der Hand mit den Fingern der Hand und/oder die einzelnen Finger in einer natürlich dann detaillierteren Aufnahme möglich ist. Aufgrund dieser Ausgestaltung ist es mit der Erfindung möglich, daß mit der erfindungsgemäßen Vorrichtung drei verschiedene Einsatzbereiche erreicht werden können. Zum einen ist es möglich im Bereich der Handanlage Gesamtaufnahmen der Hand, insbesondere mit den einzelnen, nebeneinanderliegenden Fingern anzufertigen und auf der anderen Seite, durch eine im Fingererfassungsbereich angeordnete Bilderfassungseinheit, einzelne Aufnahmen des Fingers anzufertigen. Diese Einzelaufnahmen sind dann natürlich entsprechend exakter und aussagekräftiger.

Durch die Kombination dieser beiden Bereiche, also Fingererfassungsbereich und Handanlagebereich an einer Vorrichtung, wird es natürlich auch möglich, in ergonomischer Weise entsprechende Datensätze über die Finger- beziehungsweise Handlinien eines Probanden einschließlich Plausibilitäts- und Qualitätsüberprüfung anzufertigen. Wie weiter unten noch beschrieben wird, erreicht die Erfindung durch diese erfindungsgemäße Ausgestaltung, daß eine Aufnahme des Fingers, die im Fingererfassungsbereich von dem Finger genommen worden ist, im Hinblick auf die Lage des Fingers an der Hand, zum Vergleich mit dem Kontrollabzug eindeutig zuordenbar ist. Die vermeintlich redundante Verbindung mehrerer Bilderfassungseinheiten in einem Gerät führt letztendlich zu dem Vorteil, in einem Gerät mit hoher Sicherheit den entsprechenden Fingerabdruck oder die entsprechenden Handlinienabdrücke nehmen zu können und daß durch die Zuverfügungstellung eines Fingererfassungsbereiches eine entsprechend gute Aufnahmequalität bei der Erstellung der Aufnahme des einzelnen Fingers möglich ist.

Es ist von Vorteil, daß das Gehäuse im Handanlage- beziehungsweise Daumenanlagebereich ein optisch transparentes Gehäuseteil aufweist. Dies schützt die empfindlichen optischen beziehungsweise elektronischen Bauteile im Gehäuseinneren vor Verschmutzung, Beschädigung oder Kontakt mit Wasser, was ein einwandfreies Funktionieren der Anordnung in jedem Fall beeinträchtigen würde. Durch die Ausgestaltung dieses Gehäuseteils als optisch transparent ist es möglich, die Fingerlinien beziehungsweise Daumenlinien abzuscannen und entsprechend aufzunehmen. Der Begriff "Optik" ist dabei nicht nur auf den sichtbaren Bereich beschränkt, sondern erstreckt sich extensiv auf einen größeren Wellenlängenbereich, nämlich auf diesen Wellenlängenbereich, in welchem die dazugehörige Scanneinheit arbeitet. Optisch transparent ist daher dahingehend zu verstehen, daß das Material des Gehäuseteiles für die Wellenlänge, mit welcher die Scanneinheit betrieben wird, optisch transparent ist. Üblicherweise wird dies im sichtbaren Bereich sein und/oder in den daran anschließenden infraroten oder ultravioletten Wellenlängenbereichen.

In einer Variante der Erfindung ist vorgesehen, daß das optisch transparente Gehäuseteil auf der dem Daumen beziehungsweise Finger zugewandten Seite eine gegenüber der übrigen Gehäuseoberfläche zumindest teilweise zurückstehende Außenfläche aufweist. Es ist gefunden worden, daß bereits sehr gute Ergebnisse erreicht werden, wenn ein berührungsloses Abscannen der Daumenbeziehungsweise Fingerlinien erreicht wird. Berührt der Daumen oder die Finger die Oberfläche des optisch transparenten Gehäuseteils, so kann es dort zu Verzerrungen oder Verschmutzungen und so weiter kommen. Gleichzeitig soll natürlich der aufzunehmende Daumen oder Finger verhältnismäßig genau positioniert sein, damit die optische Aufnahme scharf erfolgt. Es ist daher günstig, daß zumindest ein Teil der Außenfläche des optisch transparenten Gehäuseteiles gegenüber der übrigen Gehäuseoberfläche zurücksteht und sich so der Abstand zwischen dem Finger/Daumen und dem Gehäuse partiell derart erhöht, daß ein Berühren des optisch transparenten Gehäuseteiles vermieden wird.

Um ein möglichst gutes Abbild zu erhalten ist es von Vorteil, die Hand beziehungsweise die Finger oder den Daumen derart zu positionieren, daß eine gute Focussierung beziehungsweise Bildübertragung möglich ist. Hierzu ist vorgesehen, daß die Hand beziehungsweise die Finger sowie der Daumen in dem jeweiligen Anlagebereich beabstandet vom Gehäuse beziehungsweise vom optisch transparenten Gehäuseteil, bevorzugt durch Führungsmittel positioniert ist. Die Führungsmittel stellen dadurch sicher, daß sich der Finger an der richtigen Stelle, in der Brennebene zu der das Bild aufnehmenden Bildaufnahmeeinheit befindet. Gleichzeitig wird auch vorgesehen, daß eine berührungslose Fingerlinienerkennung realisiert wird, wodurch die ansonsten entstehenden Nachteile vermieden werden. Dieser Vorschlag führt dazu, daß keine plastische Verzerrung zu korrigieren ist, die ansonsten durch einen gegen eine Oberfläche gedrückten Finger besteht. Auch wird dadurch die ansonsten drohende schlechte Qualität bei der Aufnahme von nassen Fingern vermieden. Auch zu trockene Finger führen zu einem schlechten Abbild bei den Anordnungen, bei denen der Finger auf eine Oberfläche zum Beispiel des Sensors aufgedrückt wird. Da der Finger nicht auf einer Oberfläche aufliegt, besteht hier auch kein Verschmutzungsproblem, was insbesondere bei den empfindlichen optischen Anordnungen sonst zu entsprechenden Beeinträchtigungen führen würde. Neben dem Auftrag von Verschmutzung auf die Oberfläche ist natürlich auch zu beachten, daß der regelmäßige Kontakt von Fingern auf der Sensoroberfläche dessen Beschichtung beeinträchtigen oder zerstören kann. All diese Probleme werden zuverlässig dadurch vermieden, daß eine berührungslose Anordnung in einer bevorzugten Variante der Erfindung zum Einsatz kommt.

Um sicherzustellen, daß die Finger in einer optisch guten Position liegen, also mit einer hinreichenden Tiefenschärfe und Kontrast das Bild aufgenommen werden kann, ist es günstig, die Finger beziehungsweise die Hand entsprechend zu führen. Hierzu ist vorgesehen, daß der Handanlagebereich taschenartig ausgebildet ist, wodurch die Hand im Handanlagebereich eine entsprechende Führung erfährt.

Von Vorteil ist es hierbei, daß am Daumenanlagebereich beziehungsweise Handanlagebereich ein Sensor, insbesondere ein Positionssensor oder ein Anlagesensor vorgesehen ist. Durch den Sensor kann zum einen festgestellt werden, ob sich ein Finger beziehungsweise Daumen zum Beispiel für das Erstellen von entsprechenden Aufnahmen im jeweiligen Anlagebereich befindet und/oder ob der aufzunehmende Daumen beziehungsweise Finger auch in der Brennebene für eine möglichst scharfe Aufnahme positioniert ist. Als Positionssensor ist zum Beispiel der Einsatz von Lichtschranken in der jeweiligen Brennebene vorstellbar, die, wenn diese unterbrochen sind, signalisieren, daß sich der Finger zum Beispiel zu nah am Gehäuse befindet und daher ein unscharfes Bild genommen wird. Der Anlagesensor ist zum Beispiel daraufhin ausgebildet, ob sich der Daumen/Finger tatsächlich im Anlagebereich befindet. Dies kann zum Beispiel durch einen berührungslos wirkenden Sensor erfolgen oder aber auch durch mechanisch, kapazitiv, induktiv, elektrisch oder optisch wirkende Sensoren.

Auf Basis dieser Sensorik ist es prinzipiell auch möglich, einen Regelkreis zu errichten, durch welchen sichergestellt wird, daß die aufzunehmende Fingerfläche mit den Linien (gleiches gilt natürlich auch für den Daumen) sich in der Brennebene befindet, unabhängig von der tatsächlichen Ausgestaltung des Fingers, also ob es sich um einen dicken oder einen dünnen Finger handelt. Hierzu sind zum Beispiel die Führungsmittel dann beweglich ausgebildet und bilden mit dem Sensor einen Steuerregelkreis.

In einer bevorzugten variante hierzu ist vorgesehen, daß an dem Führungsmittel mindestens ein Anlagesensor angeordnet ist. Das Führungsmittel liegt auf Kontakt mit dem Daumen beziehungsweise Finger an. In der Regel wird dabei die nicht zu scannende Fingerrückseite oder Daumenrückseite mit dem Führungsmittel zusammenwirken. Dadurch wird die Aufnahme nicht behindert. Der Anlagesensor registriert, wenn die Hand am Führungsmittel anliegt und gibt in der Steuerung eine entsprechende Sequenz frei, daß es nunmehr möglich ist, Bilder aufzunehmen. Es ist zum Beispiel vorgesehen, daß ein Bild beziehungsweise eine Bildfolge erst dann ausgelöst wird, wenn alle Finger am Führungsmittel, zum Beispiel dem Bügel anliegen. Es müssen alle Berührungssensoren kontaktiert sein, zum Beispiel pro Finger zwei bis drei Sensoren, damit auch sicher gewährleistet ist, daß die Finger in der Brennebene der Kamera liegen und die Anzahl der Fehlversuche möglichst gering ist beziehungsweise eine möglichst hohe Qualität der Bilder zur Verfügung steht. Es können dabei zum Beispiel die Führungsmittel als stromleitende Bügel ausgebildet sein, wobei der Sensor die Finger dann erkennt, wenn zwischen zwei Bügeln ein (geringer) Strom fließen kann, wenn nämlich der Finger direkt an dem Bügel anliegt. Dabei ist es zum Beispiel auch möglich, die Führungsmittel so in Sektoren zu unterteilen, daß die einzelnen Finger erkannt werden. Dies kann zum Beispiel durch entsprechende Isolierstücke im Bügel erfolgen. Natürlich sind auch hier alle anderen möglichen Sensortypen einsetzbar, wie sie auch oben bereits beschrieben wurden.

In einer bevorzugten Ausgestaltung ist vorgesehen, daß als Führungsmittel im Handanlagebereich mindestens ein, die Hand umschließender, Bügel vorgesehen ist. Diese Anordnung erreicht, daß die Hand in zwei Freiheitsgraden geführt ist.

Eine andere Anordnung, um das Führungsmittel zu realisieren, liegt darin, eine Aufnahmetasche oder eine unten zumindest teilweise offene Aufnahmeschale für die Finger oder Fingerspitzen vorzusehen. Die verschiedenen Führungsmittel können miteinander natürlich auch kombiniert werden. Für eine möglichst scharfe Aufnahme ist es dabei von Vorteil, wenn der Finger beziehungsweise die Hand in der richtigen Ebene für eine optimale optische Übertragung positioniert ist. Die Führungsmittel sind dafür vorgesehen, genau diese geometrische Ausrichtung zu erreichen. Dies kann aber auch mit anderen Führungsmitteln in gleicher Weise realisiert werden. Zum Beispiel befinden sich die Sensoren in der Aufnahmetasche beziehungsweise in der Aufnahmeschale.

Die Erfindung ist nicht darauf beschränkt, nur die Aufnahme von den Fingerlinien der Finger, Daumen, Fingerspitzen beziehungsweise Daumenspitzen aufzunehmen. Die Anordnung kann in gleicher Weise auch dazu dienen, daß die Handflächenlinien erkannt und aufgenommen werden.

In einer bevorzugten Variante der Erfindung ist vorgesehen, daß an der Vorrichtung je zwei Handanlagebereiche und Daumenanlagebereiche angeordnet sind. Dadurch ist es möglich, daß die Vorrichtung gleichzeitig Bilder von allen Fingern und Daumen beider Hände aufnimmt. Diese Bilder werden nachfolgend auch als Kontrollabzüge beziehungsweise Kontrollabzug bezeichnet werden. Gerade wenn diese Abzüge gleichzeitig erstellt werden, wird entsprechend Zeit gespart. Die beiden Hände werden dabei ergonomisch günstig geführt, in der Weise, daß die Fingerspitzen so in der Brennebene der Scanneinrichtung beziehungsweise deren Bildaufnahmeeinheit positioniert sind. Die Daumen werden zur gleichen Zeit an der Daumananlagefläche positioniert. Hierfür dient eine separate Bildaufnahmeeinheit.

Dabei ist es günstig, daß die Handanlagebereiche an gegenüberliegenden Gehäuseteilen, zum Beispiel den seitlichen Gehäuseteilen, angeordnet sind. Das Gehäuse der Vorrichtung ist zum Beispiel schachtelartig ausgebildet und die Handanlagebereiche sind an den jeweiligen außenliegenden Seitenflächen ergonomisch günstig erreichbar.

Alternativ hierzu ist es möglich, die Handanlagebereiche auf dem gleichen Gehäuseteil, zum Beispiel dem oberen oder unteren Gehäuseteil, anzuordnen. Dabei wird ausgenützt, daß die Hand zum Beispiel auf eine im Wesentlichen horizontal orientierte Fläche auflegbar ist oder von unten anlegbar ist. In diesem Fall wird dann der Daumen so positioniert sein, daß er zum Beispiel am vorderen Gehäuseteil durch den dort angeordneten Daumenanlagebereich anliegt.

Die Anordnung ist dabei so gewählt, daß der Daumenanlagebereich und der Handanlagebereich im Wesentlichen rechtwinklig zueinander orientiert sind. Dabei ist die Anordnung nicht auf einen rechten Winkel beschränkt. Gemäß der Erfindung wird auch vorgesehen, daß der Handanlagebereich und der Daumenanlagebereich beziehungsweise die diesen Bereich aufnehmenden Gehäuseteile in einem Winkelbereich von ca. 40° bis 100° winklig zueinander angeordnet sind, derart, daß die Finger, gegebenenfalls auch die Handfläche einerseits und der Daumen andererseits gleichzeitig in den jeweiligen Anlagebereichen positioniert und scannbar sind. Eine solche Ausgestaltung trägt der menschlichen Daumen-Hand-Stellung Rechnung und ist ergonomisch günstig einsetzbar und angenehm zu benützen.

Es ist von Vorteil, wenn die Scanneinheit eine Beleuchtungs- und eine Bildaufnahmeeinheit aufweist. Die Bildaufnahmeeinheit kann dabei ein auf CMOS-Technologie basierendes Kamera-Halbleiterbauteil sein, welches zum Beispiel in einer Matritzausführung eine flächige Abbildung mit entsprechend hoher Auflösung (zum Beispiel von 500 dpi) erlaubt. Es ist auch möglich, daß die Scanneinheit mehrere Bildaufnahmeeinheiten besitzt oder aber die Vorrichtung mehrere Scanneinheiten, jeweils bestehend aus einer Beleuchtungs- und einer Bildaufnahmeeinheit umfaßt. Günstigerweise wird die Beleuchtungseinheit sowohl für die Aufnahme der vier Finger wie auch für die Aufnahme des Daumens gemeinsam genützt, aber die jeweiligen Bildaufnahmeeinheiten sind getrennt.

Dadurch ist es möglich, der unterschiedlichen räumlichen Anordnung der vier Finger im Bereich der Handanlagefläche einerseits und der winklig dazu angeordneten Daumenanlagefläche mit dem aufgelegten Daumen andererseits Rechnung zu tragen, um eine optimale optische Bildübertragung mit hoher Güte, Kontrast, Tiefenschärfe und Auflösung zu erreichen. Die Scanneinheit beziehungsweise Bildaufnahmeeinheit ist natürlich dabei dem jeweiligen Handanlage- beziehungsweise Daumenanlagebereich zugeordnet. Für den Fall, daß die Vorrichtung zwei Handanlagebereiche beziehungsweise Daumenanlagebereiche umfaßt, ist auch hierzu jeweils eine einzelne Scanneinheit, gegebenenfalls bestehend aus zwei Bildaufnahmeeinheiten und einer Beleuchtungseinheit vorgesehen.

Um eine optimale Bildaufnahme zu erreichen ist vorgesehen, daß die Bildaufnahmeeinheit optische Bauteile wie Linsen, Spiegel und dergleichen zur Focussierung des aufzunehmenden Bildes aufweist. Insbesondere die Anordnung eines Spiegels gerade im Strahlengang der Bildaufnahme der vier Finger erlaubt es, den optischen Weg hier zu falten und eine befriedigende Auflösung und Tiefenschärfe zu erreichen. Gleichzeitig wird dadurch, durch den "gefalteten" optischen Weg die Abmessung des Gehäuses der erfindungsgemäßen Vorrichtung klein gehalten.

Um ein möglichst fehlerfreies Ablegen der von den einzelnen Fingern erzeugten Aufnahmen zu erreichen und insbesondere auch eine fehlerfreie Zuordnung der jeweils aufgenommenen Aufnahmen sicherzustellen - hierbei wird verstanden, daß zum Beispiel die Aufnahme des linken Ringfingers auch als linker Ringfinger bezeichnet ist - wird in einer weiteren Ausgestaltung der Erfindung ein erfindungsgemäßes Verfahren vorgeschlagen, wobei die Aufnahme des einzelnen Fingers mit einem Kontrollabzug der Hand beziehungsweise mehreren oder aller Finger einer Hand mit als optisch transparent ist es möglich, die Fingerlinien beziehungsweise Daumenlinien abzuscannen und entsprechend aufzunehmen. Der Begriff "Optik" ist dabei nicht nur auf den sichtbaren Bereich beschränkt, sondern erstreckt sich extensiv auf einen größeren Wellenlängenbereich, nämlich auf diesen Wellenlängenbereich, in welchem die dazugehörige Scanneinheit arbeitet. Optisch transparent ist daher dahingehend zu verstehen, daß das Material des Gehäuseteiles für die Wellenlänge, mit welcher die Scanneinheit betrieben wird, optisch transparent ist. Üblicherweise wird dies im sichtbaren Bereich sein und/oder in den daran anschließenden infraroten oder ultravioletten Wellenlängenbereichen.

In einer Variante der Erfindung ist vorgesehen, daß das optisch transparente Gehäuseteil auf der dem Daumen beziehungsweise Finger zugewandten Seite eine gegenüber der übrigen Gehäuseoberfläche zumindest teilweise zurückstehende Außenfläche aufweist. Es ist gefunden worden, daß bereits sehr gute Ergebnisse erreicht werden, wenn ein berührungsloses Abscannen der Daumenbeziehungsweise Fingerlinien erreicht wird. Berührt der Daumen oder die Finger die Oberfläche des optisch transparenten Gehäuseteils, so kann es dort zu Verzerrungen oder Verschmutzungen und so weiter kommen. Gleichzeitig soll natürlich der aufzunehmende Daumen oder Finger verhältnismäßig genau positioniert sein, damit die optische Aufnahme scharf erfolgt. Es ist daher günstig, daß zumindest ein Teil der Außenfläche des optisch transparenten Gehäuseteiles gegenüber der übrigen Gehäuseoberfläche zurücksteht und sich so der Abstand zwischen dem Finger/Daumen und dem Gehäuse partiell derart erhöht, daß ein Berühren des optisch transparenten Gehäuseteiles vermieden wird.

Um ein möglichst gutes Abbild zu erhalten ist es von Vorteil, die Hand beziehungsweise die Finger oder den Daumen derart zu positionieren, daß eine gute Focussierung beziehungsweise Bildübertragung möglich ist. Hierzu ist vorgesehen, daß die Hand beziehungsweise die Finger sowie der Daumen in dem jeweiligen Anlagebereich beabstandet vom Gehäuse beziehungsweise vom optisch transparenten Gehäuseteil, bevorzugt durch Führungsmittel positioniert ist. Die Führungsmittel stellen dadurch sicher, daß sich der Finger an der richtigen Stelle, in der Brennebene zu der das Bild aufnehmenden Bildaufnahmeeinheit befindet. Gleichzeitig wird auch vorgesehen, daß eine berührungslose Fingerlinienerkennung realisiert wird, wodurch die ansonsten entstehenden Nachteile vermieden werden. Dieser Vorschlag führt dazu, daß keine plastische Verzerrung zu korrigieren ist, die ansonsten durch einen gegen eine Oberfläche gedrückten Finger besteht. Auch wird dadurch die ansonsten drohende schlechte Qualität bei der Aufnahme von nassen Fingern vermieden. Auch zu trockene Finger führen zu einem schlechten Abbild bei den Anordnungen, bei denen der Finger auf eine Oberfläche zum Beispiel des Sensors aufgedrückt wird. Da der Finger nicht auf einer Oberfläche aufliegt, besteht hier auch kein Verschmutzungsproblem, was insbesondere bei den empfindlichen optischen Anordnungen sonst zu entsprechenden Beeinträchtigungen führen würde. Neben dem Auftrag von Verschmutzung auf die Oberfläche ist natürlich auch zu beachten, daß der regelmäßige Kontakt von Fingern auf der Sensoroberfläche dessen Beschichtung beeinträchtigen oder zerstören kann. All diese Probleme werden zuverlässig dadurch vermieden, daß eine berührungslose Anordnung in einer bevorzugten Variante der Erfindung zum Einsatz kommt.

Um sicherzustellen, daß die Finger in einer optisch guten Position liegen, also mit einer hinreichenden Tiefenschärfe und Kontrast das Bild aufgenommen werden kann, ist es günstig, die Finger beziehungsweise die Hand entsprechend zu führen. Hierzu ist vorgesehen, daß der Handanlagebereich taschenartig ausgebildet ist, wodurch die Hand im Handanlagebereich eine entsprechende Führung erfährt.

Von Vorteil ist es hierbei, daß.am Daumenanlagebereich beziehungsweise Handanlagebereich ein Sensor, insbesondere ein Positionssensor oder ein Anlagesensor vorgesehen ist. Durch den Sensor kann zum einen festgestellt werden, ob sich ein Finger beziehungsweise Daumen zum Beispiel für das Erstellen von entsprechenden Aufnahmen im jeweiligen Anlagebereich befindet und/oder ob der aufzunehmende Daumen beziehungsweise Finger auch in der Brennebene für eine möglichst scharfe Aufnahme positioniert ist. Als Positionssensor ist zum Beispiel der Einsatz von Lichtschranken in der jeweiligen Brennebene vorstellbar, die, wenn diese unterbrochen sind, signalisieren, daß sich der Finger zum Beispiel zu nah am Gehäuse befindet und daher ein unscharfes Bild genommen wird. Der Anlagesensor ist zum Beispiel daraufhin ausgebildet, ob sich der Daumen/Finger tatsächlich im Anlagebereich befindet. Dies kann zum Beispiel durch einen berührungslos wirkenden Sensor erfolgen oder aber auch durch mechanisch, kapazitiv, induktiv, elektrisch oder optisch wirkende Sensoren.

Auf Basis dieser Sensorik ist es prinzipiell auch möglich, einen Regelkreis zu errichten, durch welchen sichergestellt wird, daß die aufzunehmende Fingerfläche mit den Linien (gleiches gilt natürlich auch für den Daumen) sich in der Brennebene befindet, unabhängig von der tatsächlichen Ausgestaltung des Fingers, also ob es sich um einen dicken oder einen dünnen Finger handelt. Hierzu sind zum Beispiel die Führungsmittel dann beweglich ausgebildet und bilden mit dem Sensor einen Steuerregelkreis.

In einer bevorzugten Variante hierzu ist vorgesehen, daß an dem Führungsmittel mindestens ein Anlagesensor angeordnet ist. Das Führungsmittel liegt auf Kontakt mit dem Daumen beziehungsweise Finger an. In der Regel wird dabei die nicht zu scannende Fingerrückseite oder Daumenrückseite mit dem Führungsmittel zusammenwirken. Dadurch wird die Aufnahme nicht behindert. Der Anlagesensor registriert, wenn die Hand am Führungsmittel anliegt und gibt in der Steuerung eine entsprechende Sequenz frei, daß es nunmehr möglich ist, Bilder aufzunehmen. Es ist zum Beispiel vorgesehen, daß ein Bild beziehungsweise eine Bildfolge erst dann ausgelöst wird, wenn alle Finger am Führungsmittel, zum Beispiel dem Bügel anliegen. Es müssen alle Berührungssensoren kontaktiert sein, zum Beispiel pro Finger zwei bis drei Sensoren, damit auch sicher gewährleistet ist, daß die Finger in der Brennebene der Kamera liegen und die Anzahl der Fehlversuche möglichst gering ist beziehungsweise eine möglichst hohe Qualität der Bilder zur Verfügung steht. Es können dabei zum Beispiel die Führungsmittel als stromleitende Bügel ausgebildet sein, wobei der Sensor die Finger dann erkennt, wenn zwischen zwei Bügeln ein (geringer) Strom fließen kann, wenn nämlich der Finger direkt an dem Bügel anliegt. Dabei ist es zum Beispiel auch möglich, die Führungsmittel so in Sektoren zu unterteilen, daß die einzelnen Finger erkannt werden. Dies kann zum Beispiel durch entsprechende Isolierstücke im Bügel erfolgen. Natürlich sind auch hier alle anderen möglichen Sensortypen einsetzbar, wie sie auch oben bereits beschrieben wurden.

In einer bevorzugten Ausgestaltung ist vorgesehen, daß als Führungsmittel im Handanlagebereich mindestens ein, die Hand umschließender, Bügel vorgesehen ist. Diese Anordnung erreicht, daß die Hand in zwei Freiheitsgraden geführt ist.

Eine andere Anordnung, um das Führungsmittel zu realisieren, liegt darin, eine Aufnahmetasche oder eine unten zumindest teilweise offene Aufnahmeschale für die Finger oder Fingerspitzen vorzusehen. Die verschiedenen Führungsmittel können miteinander natürlich auch kombiniert werden. Für eine möglichst scharfe Aufnahme ist es dabei von Vorteil, wenn der Finger beziehungsweise die Hand in der richtigen Ebene für eine optimale optische Übertragung positioniert ist. Die Führungsmittel sind dafür vorgesehen, genau diese geometrische Ausrichtung zu erreichen. Dies kann aber auch mit anderen Führungsmitteln in gleicher Weise realisiert werden. Zum Beispiel befinden sich die Sensoren in der Aufnahmetasche beziehungsweise in der Aufnahmeschale.

Die Erfindung ist nicht darauf beschränkt, nur die Aufnahme von den Fingerlinien der Finger, Daumen, Fingerspitzen beziehungsweise Daumenspitzen aufzunehmen. Die Anordnung kann in gleicher Weise auch dazu dienen, daß die Handflächenlinien erkannt und aufgenommen werden.

In einer bevorzugten Variante der Erfindung ist vorgesehen, daß an der Vorrichtung je zwei Handanlagebereiche und Daumenanlagebereiche angeordnet sind. Dadurch ist es möglich, daß die Vorrichtung gleichzeitig Bilder von allen Fingern und Daumen beider Hände aufnimmt. Diese Bilder werden nachfolgend auch als Kontrollabzüge beziehungsweise Kontrollabzug bezeichnet werden. Gerade wenn diese Abzüge gleichzeitig erstellt werden, wird entsprechend Zeit gespart. Die beiden Hände werden dabei ergonomisch günstig geführt, in der Weise, daß die Fingerspitzen so in der Brennebene der Scanneinrichtung beziehungsweise deren Bildaufnahmeeinheit positioniert sind. Die Daumen werden zur gleichen Zeit an der Daumananlagefläche positioniert. Hierfür dient eine separate Bildaufnahmeeinheit.

Dabei ist es günstig, daß die Handanlagebereiche an gegenüberliegenden Gehäuseteilen, zum Beispiel den seitlichen Gehäuseteilen, angeordnet sind. Das Gehäuse der Vorrichtung ist zum Beispiel schachtelartig ausgebildet und die Handanlagebereiche sind an den jeweiligen außenliegenden Seitenflächen ergonomisch günstig erreichbar.

Alternativ hierzu ist es möglich, die Handanlagebereiche auf dem gleichen Gehäuseteil, zum Beispiel dem oberen oder unteren Gehäuseteil, anzuordnen. Dabei wird ausgenützt, daß die Hand zum Beispiel auf eine im Wesentlichen horizontal orientierte Fläche auflegbar ist oder von unten anlegbar ist. In diesem Fall wird dann der Daumen so positioniert sein, daß er zum Beispiel am vorderen Gehäuseteil durch den dort angeordneten Daumenanlagebereich anliegt.

Die Anordnung ist dabei so gewählt, daß der Daumenanlagebereich und der Handanlagebereich im Wesentlichen rechtwinklig zueinander orientiert sind. Dabei ist die Anordnung nicht auf einen rechten Winkel beschränkt. Gemäß der Erfindung wird auch vorgesehen, daß der Handanlagebereich und der Daumenanlagebereich beziehungsweise die diesen Bereich aufnehmenden Gehäuseteile in einem Winkelbereich von ca. 40° bis 100° winklig zueinander angeordnet sind, derart, daß die Finger, gegebenenfalls auch die Handfläche einerseits und der Daumen andererseits gleichzeitig in den jeweiligen Anlagebereichen positioniert und scannbar sind. Eine solche Ausgestaltung trägt der menschlichen Daumen-Hand-Stellung Rechnung und ist ergonomisch günstig einsetzbar und angenehm zu benützen.

Es ist von Vorteil, wenn die Scanneinheit eine Beleuchtungs- und eine Bildaufnahmeeinheit aufweist. Die Bildaufnahmeeinheit kann dabei ein auf CMOS-Technologie basierendes Kamera-Halbleiterbauteil sein, welches zum Beispiel in einer Matritzausführung eine flächige Abbildung mit entsprechend hoher Auflösung (zum Beispiel von 500 dpi) erlaubt. Es ist auch möglich, daß die Scanneinheit mehrere Bildaufnahmeeinheiten besitzt oder aber die Vorrichtung mehrere Scanneinheiten, jeweils bestehend aus einer Beleuchtungs- und einer Bildaufnahmeeinheit umfaßt. Günstigerweise wird die Beleuchtungseinheit sowohl für die Aufnahme der vier Finger wie auch für die Aufnahme des Daumens gemeinsam genützt, aber die jeweiligen Bildaufnahmeeinheiten sind getrennt.

Dadurch ist es möglich, der unterschiedlichen räumlichen Anordnung der vier Finger im Bereich der Handanlagefläche einerseits und der winklig dazu angeordneten Daumenanlagefläche mit dem aufgelegten Daumen andererseits Rechnung zu tragen, um eine optimale optische Bildübertragung mit hoher Güte, Kontrast, Tiefenschärfe und Auflösung zu erreichen. Die Scanneinheit beziehungsweise Bildaufnahmeeinheit ist natürlich dabei dem jeweiligen Handanlage- beziehungsweise Daumenanlagebereich zugeordnet. Für den Fall, daß die Vorrichtung zwei Handanlagebereiche beziehungsweise Daumenanlagebereiche umfaßt, ist auch hierzu jeweils eine einzelne Scanneinheit, gegebenenfalls bestehend aus zwei Bildaufnahmeeinheiten und einer Beleuchtungseinheit vorgesehen.

Um eine optimale Bildaufnahme zu erreichen ist vorgesehen, daß die Bildaufnahmeeinheit optische Bauteile wie Linsen, Spiegel und dergleichen zur Focussierung des aufzunehmenden Bildes aufweist. Insbesondere die Anordnung eines Spiegels gerade im Strahlengang der Bildaufnahme der vier Finger erlaubt es, den optischen Weg hier zu falten und eine befriedigende Auflösung und Tiefenschärfe zu erreichen. Gleichzeitig wird dadurch, durch den "gefalteten" optischen Weg die Abmessung des Gehäuses der erfindungsgemäßen Vorrichtung klein gehalten.

In der Zeichnung ist die Erfindung schematisch dargestellt. Es zeigen:
- Fig. 1,4: je in einer schematischen, dreidimensionalen Ansicht die erfindungsgemäße Vorrichtung in verschiedenen Varianten;
- Fig. 2, 3: in einer Draufsicht (Fig. 2) und in einer Ansicht (Fig. 3) Details des Handanlagebereichs der erfindungsgemäßen Vorrichtung und
- Fig. 5: Diagramm einer Ausführungsform des erfindungsgemäßen Verfahrens.

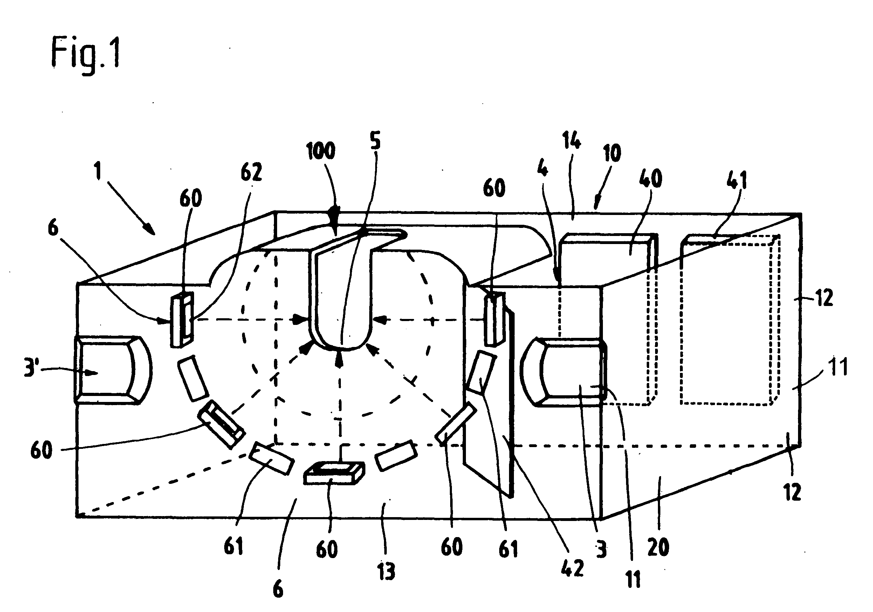

Die erfindungsgemäße Vorrichtung 1 ist in Fig. 1 schematisch dargestellt. Das Gehäuse 10 ist im Wesentlichen quaderförmig oder schachtelartig ausgebildet. Es ist natürlich möglich, die Erfindung in jeglichen anders ausgestalteten Gehäusen zu realisieren. Die Erfindung legt sich hierauf nicht fest. Das Gehäuse hat zum Beispiel eine Breite von maximal 40 cm, eine Tiefe von ca. 25 cm sowie eine Höhe von 12 cm.

An den Seitenflächen 12 befindet sich der Handanlagebereich 2. Der Handanlagebereich auf der linken Seite ist aufgrund der dreidimensionalen Ansicht leider verdeckt.

An der Vorderseite 13 befinden sich jeweils am linken und rechten Ende der Vorderseite 13 die Daumenanlagebereiche 3, 3'. Die Anordnung ist dabei so gewählt, daß die Daumenanlagebereiche 3, 3' mit den jeweiligen Handanlagebereichen 2 derart zusammenwirken, daß die auf dem Handanlagebereich 2 aufliegenden Finger gleichzeitig ein Aufliegen des Daumens auf dem Daumenanlagebereich 3 erlauben, wobei dies bei möglichst hoher Ergonomie erfolgt.

Es ist auch ein Aspekt der Erfindung eine Vorrichtung zur Verfügung zu stellen, die sich gut greifen läßt, also ergonomisch angenehm benutzbar ist. Dabei ist vorgesehen, daß die Vorrichtung entweder als mobiles Gerät einsetzbar ist oder aber auch mit einem entsprechend größerem Gehäuse ortsfest ausgebildet ist.

Günstigerweise ist vorgesehen, daß der Handanlagebereich 2 und der Daumenanlagebereich 3 beziehungsweise die diesen Bereich aufnehmenden Gehäuseteile 12, 13 im Wesentlichen rechtwinklig zueinander angeordnet sind, derart, daß die Finger, gegebenenfalls auch die Handfläche einerseits (im Bereich des Handanlagebereiches 2) und der Daumen andererseits (im Daumenanlagebereich 3) gleichzeitig mit dem jeweiligen Anlagebereich positioniert und scannbar sind.

Das Scannen erfolgt durch die im Gehäuseinneren angeordnete Scanneinheit 4. Zum Schutze des Gehäuseinneren sind im Handanlagebereich 2 beziehungsweise Daumenanlagebereich 3 optisch transparente Gehäuseteile 11 vorgesehen. Diese können zum Beispiel aus Schutzglas, aber auch aus Kunststoff oder dergleichen bestehen. Es ist gut zu erkennen, daß die optisch transparenten Gehäuseteile 11 eine dem Daumen beziehungsweise Finger zugewandte Oberfläche aufweisen, die gegenüber der übrigen Gehäuseoberfläche zurücksteht. Dadurch wird erreicht, daß der Abstand zwischen dem Daumen/Finger und dem transparenten Gehäuseteil 11 vergrößert wird.

Die optische Anordnung der Scanneinheit 4 ist nun im Inneren so gewählt, daß der Strahlengang von den auf der Handanlagebereich 2 anliegenden Fingern über einen Spiegel 42 auf eine Bildaufnahmeeinheit 40 für die vier Finger gelenkt wird, wohingegen das Licht des Daumens, der auf dem Daumenanlagebereich 3 aufliegt, direkt auf eine Bildaufnahmeeinheit 41 fällt. Hieraus folgt, daß die Bildaufnahmeeinheit 41 für den Daumen am Gehäuserand angeordnet ist, wohingegen die Bildaufnahmeeinheit 40 für die vier Finger mehr im Gehäuseinneren angeordnet ist. Für die Übersichtlichkeit ist auf die Anordnung von weiteren optischen Bauteilen wie Linsen und so weiter verzichtet, es ist aber klar, daß solche Bauteile eingesetzt werden, um ein scharfes Abbild zu erzeugen. Dabei wird die Focusebene so gewählt, daß diese gerade in der üblicherweise anzunehmenden Position der Handfläche, wenn diese in den taschenartig 20 ausgebildeten Handanlagebereich eingeführt ist, liegt.

Hieraus ergibt sich, daß es für eine brauchbare Aufnahme darauf ankommt, die aufzunehmenden Finger der Hand optisch in der richtigen Lage zu haben. Hierzu dienen prinzipiell Führungsmittel 21, zum Beispiel Führungsbügel, die den optisch transparenten Gehäuseteil 11 überspannen und eine Führung für die eingeschobene Hand sowohl rechtwinklig zur seitlichen Gehäusewand 12 wie auch in dieser Ebene ergeben. Die Hand wird faktisch in ein optisch exakt oder möglichst exakt bestimmtes System eingeführt und so positioniert, daß ein qualitativ hochwertiges Bild abnehmbar ist. Dabei ist insbesondere vorgesehen, daß zur Verbesserung des Focusses der Abstand der Bügel, beziehungsweise die Lage der Führungsmittel bezüglich der Seitenwand 12 einstellbar, festlegbar ist, wodurch die aufzunehmende Handunterfläche beziehungsweise Fingerfläche exakt in der Brennebene positionierbar ist.

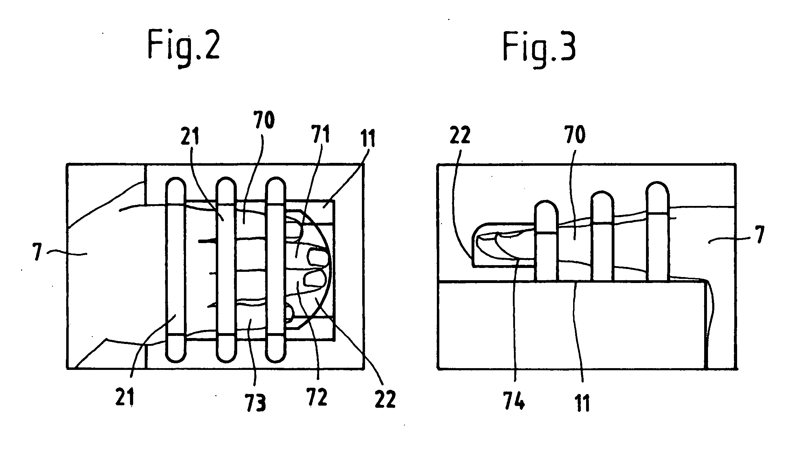

Es wurde bereits darauf hingewiesen, daß es günstig ist, ein berührungsloses Abbildungsverfahren zu wählen, um die Fingerlinien aufzunehmen. Hieraus resultiert eine gewisse Beabstandung zwischen der Handunterseite 74 und der Oberfläche des optisch transparenten Gehäuseteiles 11 (siehe Fig. 3). Dies wird insbesondere durch eine Aufnahmetasche 22 erreicht, in die die Fingerspitzen einführbar sind. Da insbesondere der Fingerkuppenbereich von Interesse ist, wird dabei eine Anordnung gewählt, bei welcher nur die Fingerspitzen entsprechend geführt sind oder aber die Finger auf einem sehr dünnen Bügel aufliegen, um die Beabstandung wie gewünscht zu erreichen.

Die Anordnung der Hand 7 in dem taschenartig 20 ausgebildeten Handanlagebereich 2 ist auch noch in Fig. 2 gezeigt. Hier sind mehrere Führungsmittel 21, die bügelartig hier ausgebildet sind, vorgesehen, die die Hand entsprechend führen. Entsprechend der sich nach vorne verjüngenden Hand ist gegebenenfalls auch die lichte Weite und Höhe der Führungsmittel entsprechend nach hinten verringert.

Neben den im Wesentlichen auf der Seite angeordneten Handanlagebereichen 2 beziehungsweise Daumenanlagebereiche 3, 3', befindet sich mehr in der Mitte des Gehäuses 10 auf der Oberseite 14, gegenüber der übrigen Oberseite erhaben, der Fingererfassungsbereich 100. Hier ist eine Auflagekante 5 vorgesehen, auf welcher ein Finger entsprechend aufgelegt wird und berührungslos die Fingermantelfläche durch die Bilderfassungseinheit 6 aufgenommen wird. Es wird dabei ein elektronisch beziehungsweise datentechnisch auswertbares Bild erzeugt, ähnlich wie dies mit der Scanneinheit 4 erfolgt.

Die Anordnung der Bilderfassungseinheit 6 ist dabei so gewählt, daß eine Mehrzahl von Aufnahmeelementen 60 radial im unteren Bereich des aufgelegten Fingers, also im Bereich der Fingerfläche angeordnet sind und jeweils ein gewisses Winkelsegment focussiert abbilden. Dabei stehen sich oben zwei Aufnahmeelemente 60 gegenüber, die Unterseite wird von einem hierzu rechtwinklig angeordneten Aufnahmeelement abgescannt, sowie im Mittelbereich, auf ca. 45° sind jeweils weitere Aufnahmeelemente angeordnet. Dadurch sind insgesamt fünf Aufnahmeelemente vorgesehen, die fünf streifenförmige Teilsegmente der Mantelfläche des als Zylinder betrachteten Fingers erzeugen.

Der Zwischenbereich zwischen den einzelnen Aufnahmeelementen 60 ist mit Beleuchtungseinheiten 61 ausgestattet. Somit wird eine möglichst schattenfreie Beleuchtung erreicht. Die Aufnahmeelemente 60 sind vorzugsweise mit optischen Baugruppen, zum Beispiel Linsen 62 ausgestattet.

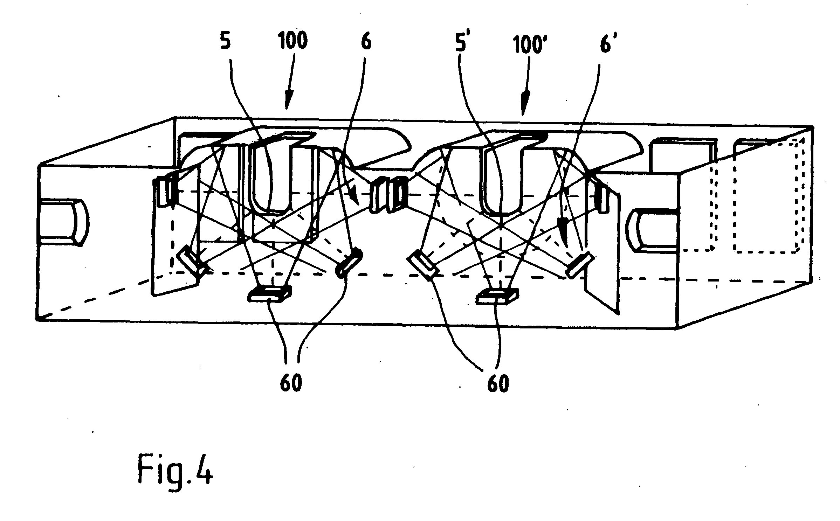

Figur 4 zeigt ein zu dem in Figur 1 gezeigten Gerät sehr ähnliche Ausgestaltung der erfindungsgemäßen Vorrichtung.

Der wesentliche Unterschied liegt darin, daß anstelle von einer Bilderfassungseinheit 6 in Figur 4 zwei Fingererfassungseinheiten 100, 100' mit je einer Bilderfassungseinheit 6, 6' bevorzugt nebeneinander angeordnet sind und sich diese beiden Fingererfassungseinheiten 100, 100' zwischen den Handanlagebereichen 2,2' befinden.

Muldenförmige Auflagekanten 5,5' sind ebenfalls doppelt vorgesehen, um den Fingern eine Auflagefläche zu bieten.

Auch der Aufbau im Inneren der in Figur 4 gezeigten Vorrichtung ist mit dem in Figur 1 im wesentlichen identisch, allein die Ausstattung für die Aufnahmeelemente ist entsprechend doppelt ausgeführt.

Ein solche ausgebildete Vorrichtung erlaubt es, simultan zum Beispiel gleichzeitig die Fingerabdrücke der beiden Daumen, der beiden Zeigefinger usw. zu nehmen. Der Zeitaufwand für das Erfassen der Fingerlinien wird erheblich gesenkt.

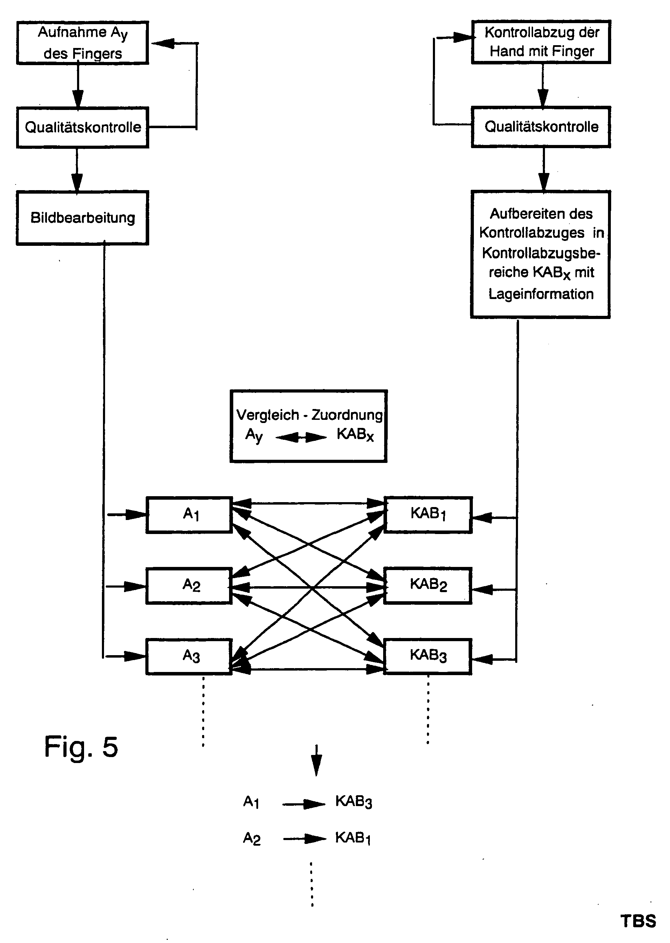

In dem in Fig. 5 gezeigten Ablaufdiagramm wird das erfindungsgemäße Verfahren beschrieben. Im linken Teil dieses Diagramms ist zunächst oben die Aufnahme der einzelnen Finger der Hand des Probanden angegeben. Die einzelnen Aufnahmen werden zum Beispiel mit Ay gekennzeichnet. Der Proband läßt sich der Reihe nach, seriell alle Finger zum Beispiel mit Hilfe der erfindungsgemäßen Vorrichtung erfassen. Für jeden Finger wird eine Aufnahme Ay angelegt.

Es erfolgt dann eine Qualitätskonstrolle, um zum Beispiel sicherzustellen, daß nur ausreichend scharfe Bilder weiterverarbeitet werden. Ergibt sich, daß die Bilder undeutlich, unscharf, verwischt oder sonst unbrauchbar sind, so wird die neuerliche Aufnahme dieses Fingers bedingt.

Wird der Finger zum Beispiel mit einer Anordnung wie in Fig. 1 aufgenommen, bei welcher der Finger auf der Auflagekante 5 des Fingererfassungsbereiches 100 aufliegt, dann wird durch die Vielzahl der verschiedenen, radial angeordneten Aufnahmeelemente 60 eine Mantelfläche des Fingers erfaßt, welche durch die Bildaufbereitung gegebenenfalls zuerst in ein planares Bild zu übertragen ist. Dies ist mit entsprechenden Bildbearbeitungsroutinen problemlos möglich.

Die Erfindung läßt es sich offen, ob zunächst die Qualitätskontrolle oder die Bildaufbereitung erfolgt oder diese Reihenfolge umgedreht wird.

Im Ergebnis wird nach der Bildaufbereitung eine Anzahl von Aufnahmen A₁ bis Aₙ (diese besitzen noch keine Lageinformationen der Finger an der Hand) zur Verfügung gestellt, die gegebenenfalls sofort nach ihrer Erstellung weiterverarbeitet werden oder erst wenn die Erfassung der Aufnahmen der Finger abgeschlossen ist. Auch bezüglich dieses Schrittes ist die Erfindung offen.

Im rechten Bereich des Diagrammes ist zunächst gezeigt, daß der Kontrollabzug der Hand mit Fingern angelegt wird. Es handelt sich hierbei um einen Abzug der Handunterseite, auf welcher bereits die Fingerlinien ebenfalls zu erkennen sind.

Auch hier folgt eine Qualitätskontrolle nach, wobei auch hier bei mangelnder Qualität eine Wiederholung des Kontrollabzuges vorgesehen ist.

Geschickterweise erfolgt dann eine Aufbereitung des Kontrollabzuges in Kontrollabzugsbereiche KABₓ. Dabei geht es zunächst darum, die Lageinformationen der einzelnen Finger an der Hand festzulegen. Dies kann durch charakteristische Gegebenheiten auf dem Kontrollabzug erreicht werden, zum Beispiel durch entsprechende Bildabtastung und Bildverarbeitung. Dabei ist der Begriff Kontrollabzugsbereich hier nicht darauf beschränkt, daß der erstellte Kontrollabzug in eine Mehrzahl von Kontrollabzugsbereichen unterteilt wird, sondern es muß lediglich die Lageinformation ermittelt werden. Günstig ist es, wenn tatsächlich eine Unterteilung erfolgt, da dann der Aufwand für einen Vergleich beziehungsweise eine Zuordnung der einzelnen Fingeraufnahmen erheblich sinkt.

Es gehört aber ebenfalls eine Lösung zur Erfindung, in welcher zum Beispiel ein Kontrollabzug in vier gleiche Kontrollabzugsbereiche unterteilt wird, die die gleiche Information haben, aber bezüglich der Lageinformation der einzelnen Finger an der Hand Unterschiede aufweisen.

Es werden dann eine Mehrzahl von Kontrollabzugsbereichen KABₓ zur Verfügung gestellt, die dann für einen Vergleich beziehungsweise eine Zuordnung zu den Aufnahme dienen.

Bei diesem abschließenden Schritt wird zu der jeweiligen Aufnahme A_{y} der passende Kontrollabzug KABₓ gesucht und bei hinreichender Übereinstimmung entsprechend der Kriterien der Bildbearbeitung deren Zuordnung festgelegt.

So resultiert, daß die Aufnahme 1 zum Beispiel dem Kontrollabzug KAB₃ zugeordnet ist, wobei die Lageinformationen des Kontrollabzuges KAB₃ zum Beispiel den Mittelfinger der rechten Hand betreffen.

## Patentansprüche

1. Vorrichtung für die berührungslose Fingerlinienerkennung, wobei die Vorrichtung wenigstens einen Fingererfassungsbereich besitzt, und der Fingererfassungsbereich zumindest eine Bilderfassungseinheit aufweist, die dazu dient, einen Großteil der Fingermantelfläche aufzunehmen, **dadurch gekennzeichnet, dass** die Bilderfassungseinheit (6) aus mehreren, einzelnen Aufnahmeelementen (60) besteht, die radial um eine angenommene Fingerachse angeordnet sind und der Fingererfassungsbereich durch eine Auflagekante (5) für den Fingeransatzt begrenzt wird, dergestalt, dass der Finger über die Auflagekante vorsteht und unterhalb des vorstehenden Fingers die Bilderfassungseinheit (6) vorgesehen ist.

2. Vorrichtung nach Anspruch 1, **dadurch gekennzeichnet, daß** die Aufnahmeelemente (60) einen Winkelbereich von ca. 180° abdecken, insbesondere eine Abbildung der Fingerunterseite von Nagel zu Nagel erlauben.

3. Vorrichtung nach einem oder beiden der vorhergehenden Ansprüche, **dadurch gekennzeichnet, daß** zwei oder mehrere Fingererfassungsbereiche nebeneinander angeordnet sind und/oder jeder Fingererfassungsbereich mit einer Bilderfassungseinheit oder einer geringen Anzahl von Bilderfassungseinheiten in Verbindung steht und/oder zwei Handanlagebereiche und Daumenanlagebereiche an der Vorrichtung angeordnet sind und die Vorrichtung gleichzeitig Bilder von allen Fingern und allen Daumen beider Hände aufnimmt.

4. Vorrichtung nach einem oder mehreren der vorhergehenden Ansprüche, **dadurch gekennzeichnet, daß** zwischen dem Aufnahmeelement (60) Beleuchtungseinheiten (61) angeordnet sind und/oder Beleuchtungseinheiten (61) vorgesehen sind und die Beleuchtungseinheiten (61) grünes Licht ausstrahlen.

5. Vorrichtung nach einem oder mehreren der vorhergehenden Ansprüche, **dadurch gekennzeichnet, daß** das Aufnahmeelement (60) beziehungsweise Bilderfassungseinheit (6) optische Bauteile wie Linsen (62) und dergleichen umfaßt und/oder die Bilderfassungseinheit (6) beziehungsweise das Aufnahmeelement (60) als elektronische Bilderfassungseinheit beziehungsweise Aufnahmeelement (60) ausgebildet ist.

6. Vorrichtung nach einem oder mehreren der vorhergehenden Ansprüche, **dadurch gekennzeichnet, daß** die Auflagekante (5) neben einem oder zwischen mehreren Handanlagebereichen (2) angeordnet ist.

7. Vorrichtung nach einem oder mehreren der vorhergehenden Ansprüche, **dadurch gekennzeichnet, daß** ein Gehäuse (10) vorgesehen ist und die Auflagekante (5) auf oder in der Gehäuseoberseite (14) angeordnet ist und/oder die von den einzelnen Aufnahmeelementen (60) aufgenommenen Ansichten der Fingermantelfläche durch eine Bildverarbeitungseinheit in zweidimensionale Bilder überführt werden und/oder die Vorrichtung durch die Bilderfassungseinheit (6) Aufnahmen der einzelnen Finger und durch eine Scanneinheit (4) zumindest einen Kontrollabzug der Hand mit mehreren Fingern erstellt.

8. Vorrichtung nach einem oder mehreren der vorhergehenden Ansprüche, **gekennzeichnet durch** eine Vergleichs- und Zuordnungseinheit der Vorrichtung, wobei diese die einzelnen Aufnahmen der Finger zumindest mit einem Teil des Kontrollabzuges vergleicht und in Abhängigkeit dieses Vergleiches die einzelnen Fingerlinienbilder den verschiedenen Fingern der Hand zuordnet und/oder das Scannen des Fingers beziehungsweise des Daumens berührungslos erfolgt.

9. Vorrichtung nach einem oder mehreren der vorhergehenden Ansprüche, **dadurch gekennzeichnet, daß** eine Scanneinheit (4) vorgesehen ist, die eine Beleuchtungs- und eine Bildaufnahmeeinheit (40, 41) aufweist.

10. Verfahren für die Erkennung von Fingerlinien mit einer Vorrichtung nach einem oder mehreren der vorhergehenden Ansprüche, wobei die Aufnahme eines einzelnen Fingers mit einem Kontrollabzug der Hand beziehungsweise mehrerer oder aller Finger einer Hand mit dem einzelnen Finger verglichen wird, wobei bei einem positiven Vergleich eine Zuordnung der Aufnahme des einzelnen Fingers erfolgt, **dadurch gekennzeichnet, daß** nacheinander, in kurzer Folge, eine Mehrzahl von Kontrollabzügen beziehungsweise Aufnahmen mit der Vorrichtung aufgenommen werden und die qualitativ besten Kontrollabzüge beziehungsweise Aufnahmen weiterverwendet werden oder, bei Unterschreiten eine Mindestqualitätsniveaus eine nochmalige Anfertigung von Kontrollabzügen beziehungsweise Aufnahmen mit der Vorrichtung erfolgt.

## Claims

1. Device for the contactless recognition of finger lines, the device having at least one area for the collecting of fingers, and the area for collecting the fingers having at least one picture collecting unit serving for recording a large part of the surface area of the finger, **characterised in that** the picture collecting unit (6) consists of several individual recording elements (60) arranged radially around a supposed finger axis, and the finger collecting area is limited by a resting edge (5) for the base of the finger, the finger projects beyond the resting edge, in such a way that the picture collecting unit (6) is provided below the projecting finger.

2. Device according to claim 1, **characterised in that** the recording elements (60) cover an angle range of about 180°, in particular permit an image of the underside of the finger from nail to nail.

3. Device according to one or both of the preceding claims, **characterised in that** two or more finger collecting areas are arranged one beside the other, and/or each finger collecting area is linked with a one picture recording unit or a small number of picture recording units, and/or two hand contact areas and thumb contact areas are arranged at the device, and the device records simultaneously pictures of all fingers and all thumbs of both hands.

4. Device according to one or more of the preceding claims, **characterised in that** between the recording element (60) lighting units (61) are arranged, and/or lighting units (61) are provided, and the lighting units (61) emit green light.

5. Device according to one or more of the preceding claims, **characterised in that** the recording element (60) or the picture collecting unit (6) comprises optical elements such as lenses (62) and the like, and/or the picture collecting unit (6) or the recording unit (60) is designed as electronic picture collecting unit or recording element (60).

6. Device according to one or more of the preceding claims, **characterised in that** the resting edge (5) is arranged beside one or between several hand contact areas (2).

7. Device according to one or more of the preceding claims, **characterised in that** a housing (10) is provided, and the resting edge (5) is arranged on or in the housing upper side (14), and/or the views of the finger surface areas recorded by the single recording elements (60) are transferred by a picture processing unit in two-dimensional pictures, and/or the device creates by the picture collecting unit (6) recordings of the single fingers and by a scanning unit (4) at least one control copy of the hand with several fingers.

8. Device according to one or more of the preceding claims, **characterised by** a comparing and allocating unit of the device, the unit comparing the single recordings of the fingers with at least a part of the control copy and allocating the single finger line pictures in relation with this comparison to the different fingers of the hand, and/or scanning of the finger or the thumb being carried out contactless.

9. Device according to one or more of the preceding claims, **characterised in that** a scanning unit (4) is provided with a lighting and a picture recording unit (40, 41).

10. Method for recognising finger lines with a device according to one or more of the preceding claims, the recording of a single finger being compared with a control copy of the hand or several or all fingers of a hand with the single finger, a positive comparison being followed by an allocation of the recording of the single finger, **characterised in that** a number of control copies or recordings being recorded with the device one after the other in a short order, and the control copies or recordings with the best quality being used further on, or, when a minimum level of quality is fallen short of, the control copies or recordings are done one more time by the device.

## Revendications

1. Dispositif destiné à la reconnaissance sans contact d'empreintes digitales comportant au moins une zone de reconnaissance du doigt et cette dernière ayant au moins une unité de capture d'image permettant de capter une grande partie de la surface cylindrique d'un doigt, **caractérisé en ce que** l'unité de capture d'image (6) est composée de plusieurs éléments capteurs (60) situés de façon radiale autour de l'axe supposé du doigt de façon à ce que la zone de reconnaissance du doigt est limitée par un bord d'appui (5) permettant d'appuyer la partie proximale du doigt qui, ainsi dépasse ce bord d'appui au-dessus de l'unité de capture d'image (6).

2. Dispositif selon la revendication 1, **caractérisé en ce que** les éléments capteurs (60) couvrent un angle d'environ 180° et permettent en particulier de capter l'image de la face inférieure d'un doigt allant d'un bord d'angle à l'autre.

3. Dispositif selon l'une ou les deux revendications précédentes, **caractérisé en ce que** deux voire plus de deux zones de reconnaissance du doigt sont situées côte à côte et/ou **en ce que** chacune des zones de reconnaissance du doigt est liée à une voire à un petit nombre d'unités de capture d'image et/ou **en ce que** deux appuis de main et de pouce sont situés sur le dispositif de façon à ce que le dispositif saisisse simultanément des images de tous les doigts et des pouces de chaque main.

4. Dispositif selon une ou plusieurs des revendications précédentes, **caractérisé en ce que** des unités d'éclairage (61) sont situées entre les éléments capteurs (60) et/ou en ce que des unités d'éclairage (61) sont prévues émettant de la lumière verte.

5. Dispositif selon une ou plusieurs des revendications précédentes, **caractérisé en ce que** l'élément capteur (60) ou l'unité de capture d'image (6) comporte des éléments de construction optiques tels des lentilles (62) ou des éléments similaires et/ou **en ce que** l'unité de capture d'image (6) ou l'élément capteur (60) est configuré comme une unité ou un élément électronique (60) de reconnaissance d'image.

6. Dispositif selon une ou plusieurs des revendications précédentes, **caractérisé en ce que** le bord d'appui (5) est situé à ctté d'une ou entre plusieurs zones d'appui de main (2).

7. Dispositif selon une ou plusieurs des revendications précédentes, **caractérisé en ce qu'**un châssis (10) est prévu comportant sur ou dans sa face supérieure (14) le bord d'appui (5) et/ou **en ce que** les vues de la surface du doigt captées par chacun des éléments capteurs individuels (60) sont transformées par une unité de traitement d'image en des images à deux dimensions et/ou en ce que le dispositif produit à l'aide de l'unité de capture d'image (6) des images de chacun des doigts et à l'aide d'une unité scanner (4) au moins l'image de contrôle d'une main avec plusieurs doigts.

8. Dispositif selon une ou plusieurs des revendications précédentes, **caractérisé par** une unité de comparaison et d'attribution permettant de comparer les images des doigts avec au moins une partie de l'image de contrôle et, en fonction du résultat de cette comparaison, d'attribuer les images individuelles des doigts à une main et/ou en ce que le scanning d'un doigt ou d'un pouce s'effectue sans contact.

9. Dispositif selon une ou plusieurs des revendications précédentes, **caractérisé en ce qu'**une unité scanner (4) est prévue comportant une unité d'éclairage et une unité de capture d'image (40, 41).

10. Procédé de reconnaissance d'empreintes digitales comportant un dispositif selon une ou plusieurs des revendications précédentes, permettant de comparer l'image d'un doigt individuel avec l'image de contrôle de la main ou de plusieurs ou tous les doigts d'une main et, dans le cas d'un résultat positif, l'attribution de cette image au doigt correspondant, **caractérisé en ce que** plusieurs images de contrôle sont prises par le dispositif séquentiellement et à un intervalle court, et **en ce que** les images qualitativement les meilleures sont utilisées ou, lorsque la qualité est en dessous d'une limite minimale, la capture des images est reprise par le dispositif.
